# EUROPÄISCHE PATENTSCHRIFT

(11) **EP 2 529 271 B1**
(45) Veröffentlichungstag und Bekanntmachung des Hinweises auf die Patenterteilung: **16.04.2014**
(21) Anmeldenummer: 11702927.2
(22) Anmeldetag: 18.01.2011
(51) Int. Cl.: G03B 9/62, G03B 9/22

(54) **Vorrichtung zur Steuerung eines Zentralverschlusses**
Device for controlling a central shutter
Dispositif pour commander un obturateur central

(30) Priorität: 25.05.2010 DE 102010021478; 28.01.2010 DE 102010005921
(43) Veröffentlichungstag der Anmeldung: 05.12.2012
(73) Patentinhaber: Leica Camera AG, 35606 Solms (DE)
(72) Erfinder: AAB, Konstantin, 34295 Edermünde-Grifte (DE); BEST, Stefan, Uwe, 35606 Solms-Oberndorf (DE)
(74) Vertreter: Stamer, Harald
(86) Internationale Anmeldenummer: PCT/EP2011/000185
(87) Internationale Veröffentlichungsnummer: WO 2011/091960

(56) Entgegenhaltungen:
- DE-A1-102009 020 287
- DE-C- 969 694
- US-A- 2 269 400
- US-A- 2 492 723
- US-A- 3 257 921
- US-A- 4 494 846

## Beschreibung

Aus der älteren nummehr veräffentlichten Patentanmeldung DE 10 2009 020 287 A1 der Anmelderin ist ein fotografischer Zentralverschluss bekannt, bei dem auf einem ringförmigen Lamellenträger eine Mehrzahl von Verschlußlamellen schwenkbar gelagert sind.

Die Verschlußlamellen sind am äußeren Boden eines topfförmigen Schwenkarmes befestigt. In die topfförmige Öffnung des Schwenkarmes ist die Schwenkachse der Verschlußlamellen eingesetzt. Am äußeren Topfrand eines jeden Schwenkarmes greift eine Stellvorrichtung zum Auslösen der Schwenkbewegung an.

Um die Schwenkachse des Schwenkarmes herum ist in den Schwenkarm eine Spiralfeder eingelegt, deren einer Arm am Schwenkarm festgelegt ist und deren anderer freier Arm am Lamellenträger befestigt ist. Beim Ausschwenken der Verschlußlamellen aus der Geschlossenstellung des Zentralverschlusses heraus in die Offenstellung wird die Spiralfeder gespannt.

Als Stellvorrichtung für die Schwenkbewegung ist eine ringförmige Nockenscheibe vorgesehen. Beim Drehen der Nockenscheibe um die Verschlußöffnung herum heben die Nocken jeweils über eine steilere Stellflanke den individuellen Schwenkarm zu einer Drehung um seine Schwenkachse an. Die vollständige Öffnung des Zentralverschlusses ist erreicht, wenn die Schwenkarme der Verschlußlamellen jeweils auf einem Nockenkopf unter der Spannkraft der Spiralfeder aufliegen. In dieser Stellung kann die Drehung der Nockenscheibe angehalten werden oder kontinuierlich weitergeführt werden. Nach Beendigung der Haltefunktion fällt der Schwenkarm aufgrund der Spannkraft der Spiralfeder vom Nockenkopf herunter in ein Nockental, d.h. in die Geschlossenstellung des Zentralverschlusses zurück. Auch in dieser Stellung kann die Drehung der Nockenscheibe bis zum Auslösen der nächsten Verschlußöffnung angehalten werden.

Zum Anhalten der Nockenscheibe sind zweiarmige Klinken vorgesehen, die ebenfalls auf dem Lamellenträger schwenkbar gelagert sind. Mit ihrem einen Arm fallen die Klinken in die Täler zwischen den Nocken ein und sperren mit ihrer Stirnseite durch Anschlag an einer Nockenflanke die weitere Drehung der Nockenscheibe. Mit Hilfe eines am anderen Ende der Klinke angreifenden elektrisch gesteuerten Zug- und Schubmagneten werden die Klinken aus der Haltefunktion herausgezogen oder in diese hineingedrückt.

Zum Antrieb der Nockenscheibe ist ein Federkraftspeicher vorgesehen, der nach vorheriger Spannung eine fortlaufende, schnelle Drehung der Nockenscheibe in einer Richtung bewirkt. Die Anlagekräfte der Klinken an den Nockenflanken sind entsprechend den gespeicherten Federkräften sehr hoch. Zum Lösen der Klinken werden entsprechend starke Magnetkräfte benötigt.

Die beim Lösen der Klinken auftretenden Reibungskräfte führen zu unregelmäßigen Verzögerungen bei der Freigabe der Nockenscheibe und daher zu einer ungenauen Verschluss-Steuerung. Die Hebel der Klinken müssen relativ große Wege zur Freigabe der Nockenscheibe zurücklegen. Die Einstellung kurzer Verschlußzeiten wird dadurch erschwert oder sogar begrenzt. Zur Erzeugung der notwendigen starken Magnetkräfte werden große Stromstärken benötigt, die die Kapazitäten der elektrischen Energiespeicher belasten und deren Betriebszeiten einschränken.

Der Erfindung lag daher die Aufgabe zugrunde, bei dem beschriebenen Zentralverschluss eine exaktere, schnellere und energiesparende Verschluss-Steuerung zu ermöglichen.

Diese Aufgabe wird erfindungsgemäß dadurch gelöst, dass anstelle der in der Ebene der Nockenscheibe schwenkbaren Klinken ein Hubmagnet mit einem senkrecht zur Ebene der Nockenscheibe bewegten Stößel vorgesehen wird. Der Stößel wird zum Blockieren der Nockenscheibe in die Nockentäler eingeschoben. Für den Hub des Stößels sind nur sehr kurze Wege erforderlich, um die mit relativ geringer Dicke auf der Nockenscheibe liegenden Nocken wirksam zu blockieren. Der Hubmagnet kann so ausgebildet sein, dass sein Stößel in der Ruhestellung ohne elektrische Versorgung durch eine mechanische Feder aus dem Magneten nach außen vorsteht und nur zur Freigabe der Blockierung elektromagnetisch eingezogen wird. Die Schaltzeiten solcher Hubmagneten sind sehr kurz. Der Energiebedarf ist gering.

Nachteilig ist, dass der üblicherweise zylindrische Metallstößel des Hubmagneten beim Anschlag des zu blockierenden Nockens die aus Kunststoff bestehende Nockenflanke beschädigen kann. Da die Nockenflanke an anderer Stelle der Nockenscheibe auch zum Antrieb des Schwenkarmes der Blendenlamellen dient, kann es zu unregelmäßigen Lamellenbewegungen kommen. Außerdem müssen die durch den mechanischen Federkraftspeicher bewirkten Laufzeiten zwischen aufeinander folgenden Nockentälem sehr genau mit den elektrischen Steuerzeiten des Hubmagneten abgestimmt werden, um Beschädigungen der Nockenscheibe durch einen einfahrenden Stößel zu vermeiden.

In einer Weiterbildung der Erfindung wird daher auf dem Lamellenträger eine flache, gezahnte Scheibe drehbar gelagert. Die Zahnflanken sind an die steilen Stellflanken der Nockenscheibe angepasst. Der Zahnabstand ist so gewählt, dass nach dem Auswurf einer Zahnflanke durch den Schub der Stellflanke bei Drehung der Nockenscheibe der nächste Zahn in den Bereich eines Nockentales eingedreht wird. Die Zahnscheibe kann aus Metall gefertigt sein. Da ihre Zahnflanken bei einer Drehung nur an den Stellflanken der Nockenscheibe entlang gleiten und bei der Anlage der nachfolgenden Stellflanke ein flächiger Anschlag erfolgt, werden gegenseitige Beschädigungen vermieden. Ohne zusätzliche Hemmmittel wird die Zahnscheibe bei einer Drehung der Nockenscheibe mitgedreht.

Zum Anhalten der Nockenscheibe sind an dem Lamellenträger wiederum Hubmagneten angeordnet, deren Stößel senkrecht zur Ebene des Lamellenträgers in Zahnlücken der Zahnscheibe ein- und ausgefahren werden können. Die Stößel sind so positioniert, dass die Zahnscheibe und damit die Nockenscheibe in Drehstellungen blockierbar sind, in denen die Schwenkarme der Verschlußlamellen entweder in einem Nockental liegen (Geschlossenstellung) oder auf einem Nockenkopf aufliegen (Offenstellung).

Der Vorteil dieser Weiterbildung besteht darin, dass im Bereich der Nockenscheibe Kunststoffflächen und Metallflächen aneinander entlang gleiten, während im Bereich der Stößel Metallflächen miteinander in Wechselwirkung treten, die bei Stößen weniger anfällig gegen Beschädigungen sind.

In einer weiteren Weiterbildung wird die Zahnscheibe durch eine ebenfalls aus Metall gefertigte Flügelscheibe ersetzt, deren Flügel in gleicher Weise mit den Nocken der Nockenscheibe im Eingriff stehen wie die Zähne der Zahnscheibe. Zum Blockieren der Flügel der Flügelscheibe sind auf dem Lamellenträger schwenkbar gelagerte einarmige, mit einem Klinkenkopf versehene Klinkenhebel vorgesehen. Die Klinkenhebel liegen einseitig an einer Blattfeder an, die durch ihre Vorspannung die Klinkenköpfe in Richtung der Lücken zwischen den Flügeln der Flügelscheibe drücken.

Einer der Klinkenhebel ist so positioniert, dass seine Stirn des Klinkenkopfes einen Flügel anhält, wobei das Ausschwenken des Klinkenkopfes aus der Flügellücke heraus durch einen senkrecht aus dem Lamellenträger vorstehenden Stößel eines Hubmagneten verhindert wird. Nach Einzug des Stößels in den Hubmagneten gleitet der blockierte Flügel an der Stirn des Klinkenkopfes herab und drückt den Klinkenhebel gegen die Wirkung der Blattfeder von der Flügelscheibe weg. Sobald der vorher blockierte Flügel am Kopf des Klinkenhebels vorbeigelaufen ist, wird der Klinkenkopf unter der Wirkung der gespannten Blattfeder wieder in die nachfolgende Flügellücke hinein gedrückt und durch erneutes Ausfahren des Stößels gegen Ausschwenken gesichert.

Ein anderer Klinkenhebel ist so positioniert, dass das in eine Lücke zwischen den Flügeln eingeschwenkte Kinn des Klinkenkopfes einen Flügel der Flügelscheibe am Weiterdrehen hindert. Auch hier wird ein Ausschwenken des Klinkenhebels aus der Flügellücke durch einen senkrecht aus dem Lamellenträger vorstehenden Stößel eines Hubmagneten blockiert. Nach Einzug des Stößels in den Hubmagneten gleitet der blockierte Flügel am Kinn des Klinkenkopfes entlang über den Klinkenkopf hinweg und drückt den Klinkenhebel gegen die Wirkung der Blattfeder von der Flügelscheibe weg. Sobald der vorher blockierte Flügel am Klinkenkopf vorbeigelaufen ist, wird der Klinkenkopf wieder in eine Flügellücke hineingedrückt und durch erneutes Ausfahren des Stößels in der zum Anschlag eines Flügels geeigneten Stellung gesichert.

Der Vorteil der zwischengeschalteten Klinkenhebel besteht darin, dass die notwendigen Haltekräfte an den Stößeln entsprechend der Hebellänge des Klinkenhebels untersetzt sind. Die zum Einzug der Stößel aufzuwendende elektrische Energie ist daher nochmals reduziert. Außerdem können durch Fehlsteuerung des Stößels erzeugte Beschädigungen des zu blockierenden Bauteiles nur an einer Fläche entstehen, die mit der Steuerung der Nockenscheibe in keiner Verbindung steht.

Beim Einzug des Stößels durch den Hubmagneten müssen Reibungskräfte zwischen dem anliegenden blockierten Bauteil und dem Stößel überwunden werden. Die Reibungskräfte sind materialabhängig und hängen vom Anlagedruck des blockierten Bauteiles ab. Außerdem muss der Übergang von der stärkeren Haftreibung in die schwächere Gleitreibung vollzogen werden. Die verschiedenen Einflüsse können zu Verzögerungen im Steuerverhalten führen, die bei den geforderten kurzen Verschlußzeiten zu Unsicherheiten führen können.

Zur Verringerung der reibungsabhängigen Störungen wird der Kopf des Stößels leicht konisch zugespitzt. Die zu blockierende Fläche eines Nockens der Nockenscheibe, eines Zahnes der Zahnscheibe oder einer Seite eines Klinkenkopfes wird parallel zum Konus ebenfalls angeschrägt. Dabei handelt es sich um geringe Winkel gegenüber der Senkrechten zur Ebene es Lamellenträgers. Beim Einzug des Stößels entsteht dann der überraschende Effekt, dass nach Überwindung der Haftreibung die Schwenkbewegung des blockierten Bauteiles geringfügig verzögert gegenüber dem Einzug des Stößels verläuft. Der Stößel kann daher ohne Kontakt zum vorher blockierten Bauteil vollstandig eingezogen werden. Eine Verringerung der Haftreibung kann dadurch erreicht werden, dass der Stößelkopf aus einem keramischen Material gefertigt oder mit einem keramischen Überzug versehen wird.

In der Zeichnung sind Ausführungsbeispiele der Steuervorrichtung schematisch dargestellt. Sie werden anhand der Figuren näher beschrieben. Dabei zeigen
- Fig.1: einen Stößel im direkten Eingriff mit der Nockenscheibe in der Geschlossenstellung der Verschlußlamellen,
- Fig.2: dieselbe Anordnung wie Fig.1 in der Offenstellung der Verschlußlamellen,
- Fig.3: eine Zahnscheibe im Eingriff mit der Nockenscheibe in der Geschlossenstellung der Verschlußlamellen,
- Fig.4: dieselbe Anordnung wie Fig.3 in der Offenstellung der Verschlußlamellen,
- Fig.5: eine Flügelscheibe mit Klinkenhebeln in der Geschlossenstellung der Verschlußlamellen,
- Fig.6: dieselbe Anordnung wie Fig.5 in der Offenstellung der Verschlußlamellen,
- Fig.7: einen Stößel mit konusförmigem Stößelkopf in der Haltestellung und
- Fig.8: denselben Stößel in der Einzugsstellung.

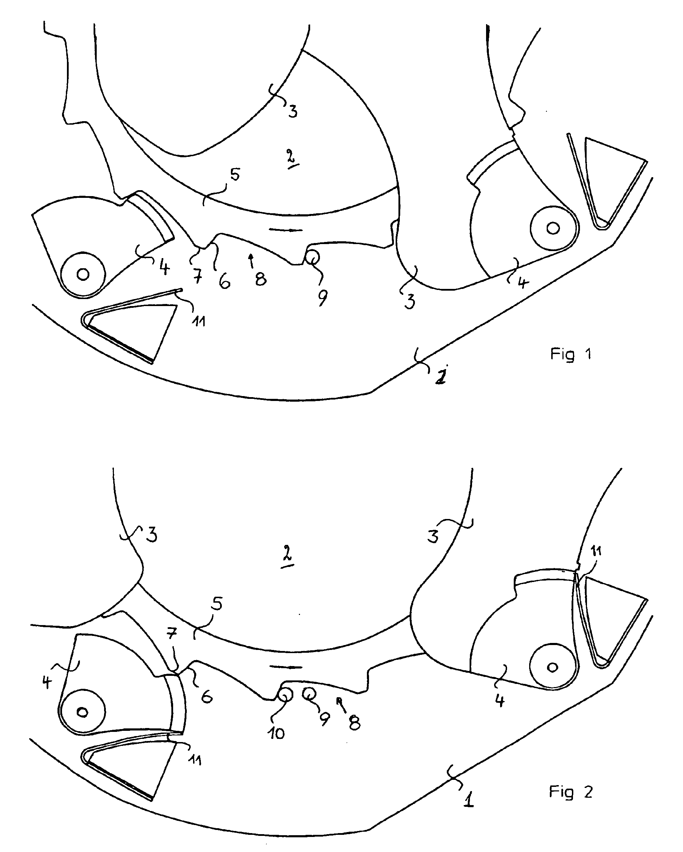

Fig. 1 zeigt ausschnittsweise einen kreisringförmigen Lamellenträger 1. Der Lamellenträger 1 umschließt die Verschlußöffnung 2. Auf dem Lamellenträger 1 sind eine Mehrzahl von Verschlußlamellen 3 jeweils an einem Schwenkarm 4 schwenkbar gelagert. Einer der Schwenkarme 4 ist mit einer Verschlußlamelle 3 bestückt dargestellt. Ein anderer Schwenkarm 4 ist ohne Verschlußlamelle 3 dargestellt. In der gewählten Darstellung überdecken die Verschlußlamellen 3 insgesamt die Verschlußöffnung 2 (Geschlossenstellung).

Als Stellvorrichtung für die Schwenkbewegung der Verschlußlamellen 3 ist auf dem Lamellenträger 1 eine ringförmige Nockenscheibe 5 konzentrisch zur Verschlußöffnung 2 in Pfeilrichtung fortlaufend drehbar gelagert. Die Nocken der Nockenscheibe 5 weisen in Pfeilrichtung eine steile Stellflanke 6 und ausgehend vom Nockenkopf 7 eine konkav geschwungen bis zur nächsten Stellflanke abfallende Flanke auf, so dass zwischen zwei aufeinander folgenden Nockenköpfen 7 ein Nockental 8 entsteht.

Bei der Drehung der Nockenscheibe 5 in Pfeilrichtung nimmt die Stellflanke 6 den Schwenkarm 4 mit, wodurch die Verschlußlamellen 3 aus der Verschlußöffnung 2 heraus geschwenkt werden.

Zur Sicherung der Geschlossenstellung der Verschlußlamellen 3 muß die Drehung der Nockenscheibe 5 in der in Fig. 1 gezeigten Stellung mechanisch blockiert werden. Dazu ist in dem Lamellenträger 1 ein senkrecht zur Ebene der Nockenscheibe 5 bewegbarer erster Stößel 9 eines unter dem Lamellenträger 1 angebrachten Hubmagneten vorhanden. Der Stößel 9 ist im ausgefahrenen Zustand so positioniert, dass er direkt eine Stellflanke 6 in der Geschlossenstellung der Verschlußlamellen 3 blockiert. Der Stößel 9 kann in der Führung des nicht dargestellten Hubmagneten unter den Druck einer in axialer Richtung wirkenden mechanischen Feder gelagert sein, die den Stößel 9 im stromlosen Zustand des Hubmagneten in das Nockental 8 schiebt, bevor die zu blockierende Stellflanke 6 ihn erreicht, um eine senkrechte Stoßbeschädigung zu vermeiden. Der mechanische Auswurf des Stößels 9 spart elektrische Energie für den Betrieb des Hubmagneten.

Fig. 2 zeigt dieselbe Anordnung in der Offenstellung der Verschlußlamellen 3. Durch Bestromung seines Hubmagneten wird der

Stößel 9 eingezogen, so dass sich die Nockenscheibe 5 unter der Einwirkung eines nicht dargestellten Antriebs in Pfeilrichtung drehen kann. Sobald die vorher blockierte Stellflanke 6 über den eingezogenen Stößel 9 hinweg gelaufen ist, wird ein zweiter gleichartiger Stößel 10 in das nachfolgende Nockental 8 eingeschoben. Dieser zweite Stößel 10 ist so positioniert, dass er die nachfolgende Stellflanke 6 blockiert, wenn der Schwenkarm 4 auf einem Nockenkopf 7 aufliegt. Die Höhe der Nockenköpfe 7 und die Länge der Schwenkarme 4 sind so aufeinander abgestimmt, dass beim Erreichen des oberen Endes der Stellflanke 6 die an dem Schwenkarm 4 befestigten Verschlußlamellen 3 die Verschlußöffnung 2 freigeben (Offenstellung).

Nach Einzug des zweiten Stößels 10 und Freigabe der weiteren Drehung der Nockenscheibe 5 überlaufen die Schwenkarme 4 die jeweiligen Nockenköpfe 7 in Richtung des nachfolgenden Nockentals 8. Der Rücklauf der Schwenkarme 4 wird im Wesentlichen durch eine in den Schwenkarm 4 eingebaute Drehfeder bewirkt. Zur Überwindung einer möglichen Haftung bei Auflage des Schwenkarmes 4 auf dem Nockenkopf 7 ist zusätzlich eine erste Blattfeder 11 vorhanden, die beim Ausschwenken des Schwenkarmes 4 gespannt wird. Die Steuerung des Verschlusses durch dadurch verbessert.

Sobald der zuletzt blockierte Nocken auch den weiterhin eingezogenen ersten Stößel 9 überlaufen hat, wird dieser wieder in das nachfolgende Nockental 8 eingeschoben, so dass die anschließende Stellflanke 6 bei Anschlag an den Stößel 9 der Verschlußlamellen 3 in der Geschlossenstellung blockiert. Ein Verschluss-Zyklus ist damit beendet.

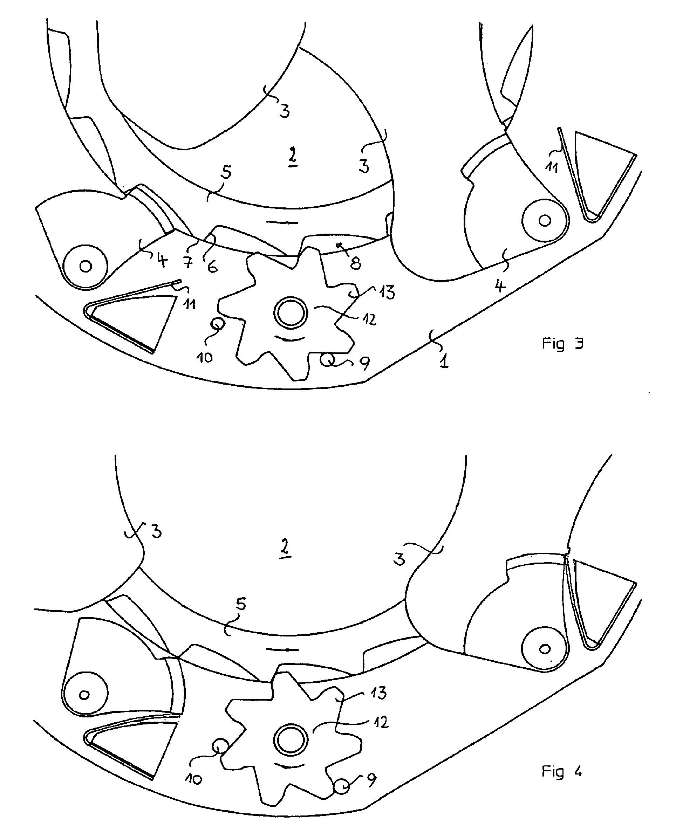

Bei dem in Fig. 3 dargestellten Ausführungsbeispiel ist die Nockenscheibe 5 als ringförmige Scheibe ausgebildet, die flächenbündig in dem Lamellenträger 1 gelagert ist. Die Nocken sind erhaben darauf liegend ausgebildet, so dass die auf dem Lamellenträger 1 schwenkbar angeordneten Schwenkarme 4 mit den Nocken in Eingriff kommen können. Diese Konstruktion der Nockenscheibe 5 ermöglicht eine einfachere Drehführung und größere Steifigkeit der Nockenscheibe 5.

Die Blockierung der Nocken erfolgt hier unter Zwischenschaltung einer auf dem Lamellenträger 1 frei drehbar gelagerten Zahnscheibe 12 mit sägezahnförmigen Zähnen 13. Die steilere Flanke der Zähne 13 wirkt mit den Stellflanken 6 der Nocken zusammen. Die flachere Flanke ist in der Formgebung an die Ausbildung der Nockentäler 8 angepasst. Die Zahnscheibe 12 kann aus Metall gefertigt sein. Die Flanken der Zähne 13 stehen nur in gleitender Verbindung mit den Flanken der Nocken, die im Allgemeinen aus einem Kunststoffmaterial gefertigt sind. Gegenseitige Beschädigungen sind daher nicht zu befürchten.

Durch Ausfahren des ersten Stößels 9 wird die Drehung der Zahnscheibe 12 in einer Stellung blockiert, in der einer ihrer Zähne 13 die Drehung der Nockenscheibe 5 in einer Stellung anhält, in der die Schwenkarme 4 die Verschlußlamellen 3 in die Geschlossenstellung geschwenkt haben. Der zweite Stößel 10 kann in dieser Stellung ebenfalls ausgefahren sein, da er die Drehung der Zahnscheibe 12 in Pfeilrichtung nicht behindert. Nach dem Einziehen des ersten Stößels 9 wird die Zahnscheibe 12 von der Nockenscheibe 5 in Pfeilrichtung weitergedreht, bis ein Zahn 13 gegen den zweiten Stößel 10 stößt. Der erste Stößel 9 kann in dieser Stellung bereits wider ausgefahren sein. Der Verschluss befindet sich in der Offenstellung (Fig. 4).

Die beiden Stößel 9, 10 liegen bei diesem Ausführungsbeispiel relativ weit auseinander, wodurch die Montage der Hubmagneten an dem Lamellenträger 1 erleichtert wird. Die Anordnung der Stößel 9, 10 in unterschiedlichen Zahnlücken vereinfacht die zeitliche Steuerung der Stößel 9, 10, da der jeweils nicht blockierende Stößel bereits vor dem Einziehen des blockierenden Stößels in Bereitschaftsstellung gebracht werden kann.

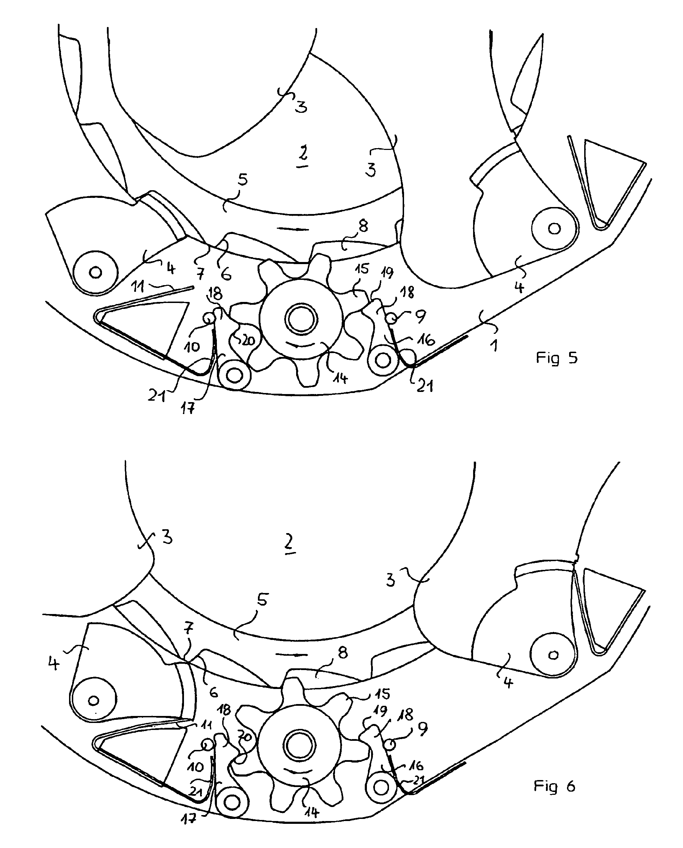

Eine Weiterbildung des vorstehend beschriebenen Blockierungssystems ist in Fig. 5 dargestellt. Mit den Nocken einer Nockenscheibe 5 steht hier eine Flügelscheibe 14 mit an ihrem Umfang angeordneten, zueinander beabstandeten, symmetrisch geformten Flügeln 15 in Wirkverbindung. Die Flügel 15 werden in diesem Fall nicht direkt über erste und zweite schaltbare Stößel 9, 10 blockiert, sondern durch schwenkbar gelagerte einarmige erste und zweite Klinkenhebel 16, 17. Die Klinkenhebel 16, 17 weisen jeweils einen Klinkenkopf 18 mit einer Stirn 19 und einem Kinn 20 auf. Die Klinkenhebel 16, 17 werden über zweite Blattfedern 21 in Richtung der Flügelscheibe 14 gedrückt und können über die Flügel 15 auch von der Flügelscheibe 14 weg gegen die Blattfedern 21 gedrückt werden. In dieser Richtung sind die Klinkenhebel 16, 17 jedoch durch erste und zweite Stößel 9, 10 blockierbar.

Bei der in Fig. 5 dargestellten Geschlossenstellungen der Verschlußlamellen 3 hat die Nockenscheibe 5 die Flügelscheibe 14 gegen die Stirn 19 des Klinkenkopfes 18 am Klinkenhebel 16 gedrückt. Der erste Stößel 9 ist ausgefahren und verhindert damit, dass der Klinkenhebel 16 unter dem Druck des Flügels 15 weiter nach außen gedrückt wird. Die durch Anlage eines Flügels 15 an der Stirn 19 des Klinkenhebels 16 blockierte Flügelscheibe 14 blockiert über einen weiteren Flügel 15 die Nockenscheibe 5 und hält die Schwenkarme 4 in der Geschlossenstellung der Verschlußlamellen 3.

Der zweite Klinkenhebel 17 wird ebenfalls durch den zweiten Stößel 10 in seiner Stellung gegen ein weiteres Ausschwenken blockiert, behindert aber nicht die Drehbarkeit der Flügelscheibe 14 in ihrer Pfeilrichtung. Nach dem Einzug des ersten Stößels 9 dreht die Nockenscheibe 5 die Flügelscheibe 14. Dabei gleitet der an der Stirn 19 des Klinkenhebels 16 anliegende Flügel 15 an der Stirn 19 entlang und drückt den Klinkenhebel 16 gegen die Wirkung der Blattfeder 21 nach außen. Gleichzeitig läuft ein anderer Flügel 15 gegen das Kinn 20 am zweiten Klinkenhebel 17 und blockiert damit die weitere Drehung der Flügelscheibe 14 und der Nockenscheibe 5 in der Offenstellung der Verschlußlamellen 3 (Fig. 6).

Der Klinkenkopf 18 des Klinkenhebels 16 wird unter der Einwirkung der Blattfeder 21 wieder in eine Lücke zwischen den Flügeln 15 gedrückt und kann in dieser Stellung durch Ausfahren des ersten Stößels 9 fixiert werden. Nach Einzug des zweiten Stößels 10 gleitet der am Kinn 20 des Klinkenhebels 17 anliegende Flügel 15 am Kinn 20 entlang und drückt den Klinkenhebel 17 nach außen bis ein anderer Flügel 15 wieder an der Stirn 19 des Klinkhebels 16 anliegt und der Zustand wie Fig. 5 wieder hergestellt ist.

Die beim Ausdrücken der Klinkenhebel 16, 17 zu überwindenden Andruckkräfte sind durch Hebellänge der Klinkenhebel 16, 17 untersetzt, so dass erheblich schnellere Freigabezeiten zwischen den Grenzstellungen der Verschlußlamellen 3 möglich sind.

Ebenso sind die Haltekräfte der Stößel 9, 10 an den Klinkenhebeln 16, 17 entsprechend untersetzt, so dass die zum Einzug der Stößel 9, 10 aufzuwendende elektrische Energie in den Hubmagneten reduziert wird.

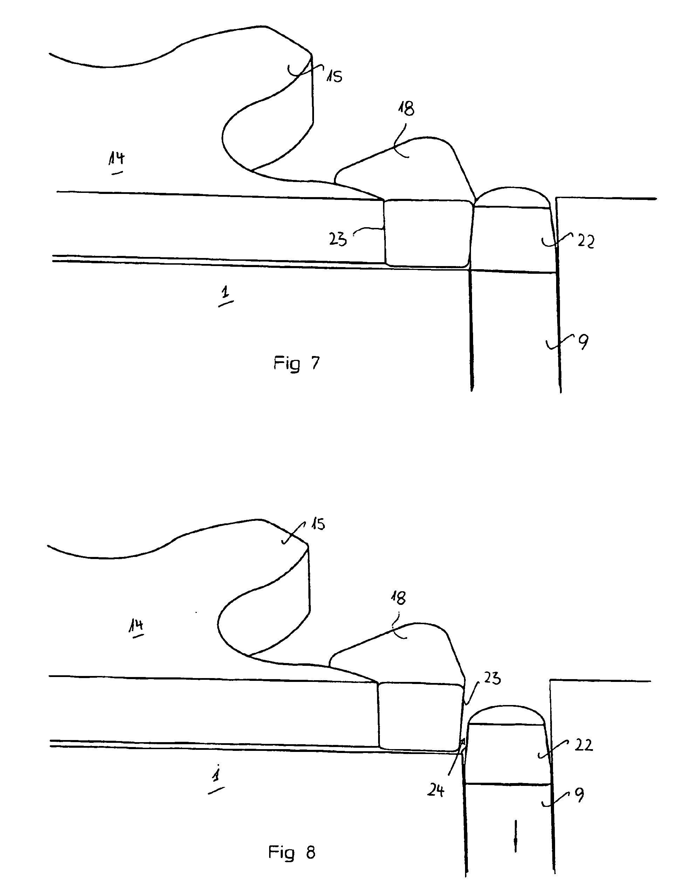

Zur Verringerung der reibungsabhängigen Kräfte zwischen den Stößeln 9, 10 und den unmittelbar zu blockierenden Bauteilen 5, 12, 18 ist es vorteilhaft, die Stößelköpfe 22 konisch verjüngt auszubilden, wie in Fig. 7, 8 am Beispiel der Klinkenhebel-Blockierung dargestellt. Daran angepasst ist auch die mit dem Stößelkopf 22 zusammenwirkende Fläche 23 an dem zu blockierenden Bauteil 18 geneigt. Zusätzlich kann der Stößelkopf 22 keramisch beschichtet oder als aufgesetzter Keramik-Konus ausgebildet sein.

Beim Einzug des Stößels 9 ist dann zu beobachten, dass sich nach Überwinden der Haftreibung zwischen Stößelkopf 22 und Fläche 23 des Bauteils 18 ein Luftspalt 24 zum Stößelkopf 22 bildet, der einen erheblich beschleunigten Einzug des Stößels 9 erlaubt.

### Bezugszeichenliste

- 1: Lamellenträger
- 2: Verschlußöffnung
- 3: Verschlußlamelle
- 4: Schwenkarm
- 5: Nockenscheibe
- 6: steile Stellflanke
- 7: Nockenkopf
- 8: Nockental
- 9: erster Stößel
- 10: zweiter Stößel
- 11: erste Blattfeder
- 12: Zahnscheibe
- 13: Zahn
- 14: Flügelscheibe
- 15: Flügel
- 16: erster Klinkenhebel
- 17: zweiter Klinkenhebel
- 18: Klinkenkopf
- 19: Stirn des Klinkenkopfes
- 20: Kinn des Klinkenkopfes
- 21: zweite Blattfeder
- 22: Stößelkopf konisch
- 23: Bauteilfläche geneigt
- 24: Luftspalt

## Patentansprüche

1. Vorrichtung zur Steuerung eines Zentralverschlusses, bei dem auf einem kreisringförmigen Lamellenträger (1) eine Mehrzahl von Verschlußlamellen (3) an einem Schwenkarm (4) schwenkbar gelagert sind und bei dem als Stellvorrichtung für die Schwenkbewegung der Verschlußlamellen (3) konzentrisch zur Verschlußöffnung (2) auf dem Lamellenträger (1) eine ringförmige Nockenscheibe (5) in einer Richtung fortlaufend drehbar gelagert ist, wobei die Drehung der Nockenscheibe (5) durch mechanischen Eingriff in ein Nockental (8) vor einer Stellflanke (6) eines Nockens blockierbar ist, **dadurch gekennzeichnet, dass** zur mechanischen Blockierung ein senkrecht zur Ebene der Nockenscheibe (5) bewegbarer Stößel (9,10) eines Hubmagneten vorhanden ist.

2. Vorrichtung nach Anspruch 1, **dadurch gekennzeichnet, dass** dem Stößel (9, 10) eine in dem Hubmagneten gelagerte, in axialer Richtung wirkende mechanische Feder zugeordnet ist, die bei Bestromung des Hubmagneten durch Einzug des Stößels (9, 10) spannbar ist.

3. Vorrichtung nach Anspruch 2, **dadurch gekennzeichnet, dass** zwei Hubmagneten vorhanden sind, die so positioniert sind, dass ihre Stößel (9, 10) entweder eine Stellflanke (6) der Nocken in der Offenstellung der Verschlußlamellen (3) oder in der Geschlossenstellung der Verschlußlamellen (3) blockieren.

4. Vorrichtung nach Anspruch 1, **dadurch gekennzeichnet, dass** auf dem Lamellenträger (1) eine mit der Nockenscheibe (5) im Eingriff stehende und von dieser antreibbare Zahnscheibe (12) drehbar gelagert ist, deren Zähne (13) in Drehrichtung eine zur Stellflanke (6) eines Nockens der Nockenscheibe (5) korrespondierende Zahnflanke und eine einem Nockental (8) angepasste Formgebung aufweisen und wobei der Hubmagnet zur Blockierung der Zahnscheibe (12) positioniert ist.

5. Vorrichtung nach Anspruch 4, **dadurch gekennzeichnet, dass** zwei Hubmagnete vorhanden sind, die so positioniert sind, dass ihre Stößel (9, 10) entweder eine Zahnflanke in der Offenstellung der Verschlußlamellen (3) oder in der Geschlossenstellung der Verschlußlamellen (3) blockieren.

6. Vorrichtung nach Anspruch 1, **dadurch gekennzeichnet, dass** auf dem Lamellenträger (1) eine mit der Nockenscheibe (5) im Eingriff stehende und von dieser antreibbare Flügelscheibe (14) mit an ihrem Umfang angeordneten, zueinander beabstandeten, symmetrisch geformten Flügeln (15) drehbar gelagert ist, die mit Hilfe eines Hubmagneten blockierbar sind.

7. Vorrichtung nach Anspruch 6, **dadurch gekennzeichnet, dass** auf dem Lamellenträger (1) ein einarmiger Klinkenhebel (16, 17) schwenkbar gelagert ist, der einen Klinkenkopf (18) aufweist, der mit einem Flügel (15) der Flügelscheibe (14) zur Anlage bringbar ist.

8. Vorrichtung nach Anspruch 7, **dadurch gekennzeichnet, dass** der Klinkenhebel (16, 17) mit einer zweiten Blattfeder (21) derart gekoppelt ist, dass der Klinkenkopf (18) gegen die Flügelscheibe (14) schwenkbar ist.

9. Vorrichtung nach Anspruch 8, **dadurch gekennzeichnet, dass** der Klinkenhebel (16, 17) in einer mit dem Klinkenkopf (18) zwischen die Flügel (15) eingeschwenkten Stellung durch den Stößel (9, 10) eines Hubmagneten blockierbar ist.

10. Vorrichtung nach Anspruch 9, **dadurch gekennzeichnet, dass** zwei Klinkenhebel (16, 17) vorgesehen sind, die jeweils in einer Schwenkstellung blockierbar sind, bei der entweder die Stirn (19) des Klinkenkopfes (18) einen Flügel (15) in der Stellung blockiert, in der der mit der Nockenscheibe (5) im Eingriff stehende Flügel (15) diese in der Geschlossenstellung der Verschlußlamellen (3) hält, oder bei der das Kinn (20) des Klinkenkopfes (18) einen Flügel (15) in der Stellung blockiert, in der der mit der Nockenscheibe (5) im Eingriff stehende Flügel (15) diese in der Offenstellung der Verschlußlamellen (3) hält.

11. Vorrichtung nach Anspruch 1, **dadurch gekennzeichnet, dass** der Stößelkopf (22) konisch verjüngt ist.

12. Vorrichtung nach Anspruch 1, **dadurch gekennzeichnet, dass** der Stößelkopf (22) mit einer keramischen Oberfläche ausgestattet ist.

13. Vorrichtung nach Anspruch 11, **dadurch gekennzeichnet, dass** die mit dem Stößelkopf (22) zusammenwirkende Fläche (23) des zu blockierenden Bauteiles (5, 12, 18) eine Neigung parallel zur konischen Verjüngung des Stößelkopfes (22) aufweist.

## Claims

1. Device for controlling a central shutter, in which a plurality of shutter leaves (3) are mounted on a circularly annular leaf carrier (1) such that they can be pivoted on a pivoting arm (4), and in which, as actuating device for the pivoting movement of the shutter leaves (3), an annular cam plate (5) is mounted on the leaf carrier (1) concentrically with respect to the shutter opening (2), such that it can be rotated continuously in one direction, it being possible for the rotation of the cam plate (5) to be blocked by mechanical engagement into a cam trough (8) in front of an actuating flank (6) of a cam, **characterized in that**, for mechanical blocking purposes, there is a push rod (9, 10) of a solenoid, which push rod (9, 10) can be moved perpendicularly with respect to the plane of the cam plate (5).

2. Device according to Claim 1, **characterized in that** the push rod (9, 10) is assigned a mechanical spring which is mounted in the solenoid, acts in the axial direction and, when current is applied to the solenoid, can be stressed by retraction of the push rod (9, 10).

3. Device according to Claim 2, **characterized in that** there are two solenoids which are positioned in such a way that their push rods (9, 10) block either an actuating flank (6) of the cams in the open position of the shutter leaves (3) or in the closed position of the shutter leaves (3).

4. Device according to Claim 1, **characterized in that** a toothed disk (12) which is in engagement with the cam plate (5) and can be driven by the latter is mounted rotatably on the leaf carrier (1), the teeth (13) of which toothed disk (12) have, in the rotational direction, a tooth flank which corresponds to the actuating flank (6) of a cam of the cam plate (5) and a shape which is adapted to a cam trough (8), the solenoid being positioned for blocking the toothed disk (12).

5. Device according to Claim 4, **characterized in that** there are two solenoids which are positioned in such a way that their push rods (9, 10) block either a tooth flank in the open position of the shutter leaves (3) or in the closed position of the shutter leaves (3).

6. Device according to Claim 1, **characterized in that** a vane disk (14) which is in engagement with the cam plate (5) and can be driven by the latter is mounted rotatably on the leaf carrier (1), with vanes (15) which are arranged on the circumference of said vane disk (14), are spaced apart from one another, are shaped symmetrically and can be blocked with the aid of a solenoid.

7. Device according to Claim 6, **characterized in that** a single-arm ratchet lever (16, 17) is mounted pivotably on the leaf carrier (1), which ratchet lever (16, 17) has a catch head (18) which can be brought into contact with a vane (15) of the vane disk (14).

8. Device according to Claim 7, **characterized in that** the ratchet lever (16, 17) is coupled to a second flat spring (21) in such a way that the catch head (18) can be pivoted against the vane disk (14).

9. Device according to Claim 8, **characterized in that** the ratchet lever (16, 17) can be blocked by the push rod (9, 10) of a solenoid in a position in which it is pivoted in with the catch head (18) between the vanes (15).

10. Device according to Claim 9, **characterized in that** two ratchet levers (16, 17) are provided which can be blocked in each case in a pivoting position, in which either the end (19) of the catch head (18) blocks a vane (15) in the position, in which the vane (15) which is in engagement with the cam plate (5) holds the latter in the closed position of the shutter leaves (3), or in which the chin (20) of the catch head (18) blocks a vane (15) in the position, in which the vane (15) which is in engagement with the cam plate (5) holds the latter in the open position of the shutter leaves (3).

11. Device according to Claim 1, **characterized in that** the push rod head (22) is conically tapered.

12. Device according to Claim 1, **characterized in that** the push rod head (22) is equipped with a ceramic surface.

13. Device according to Claim 11, **characterized in that** that face (23) of the component (5, 12, 18) to be blocked which interacts with the push rod head (22) has a slope parallel to the conical taper of the push rod head (22).

## Revendications

1. Dispositif pour commander un obturateur central dans lequel une pluralité de lamelles d'obturateur (3) sont montées sur un porte-lamelles (1) de forme annulaire circulaire de manière à pouvoir pivoter sur un bras pivotant (4) et dans lequel un disque à cames (5) annulaire est monté sur le porte-lamelles (1) de manière concentrique par rapport à l'ouverture d'obturateur (2) et de manière à pouvoir tourner dans un sens en continu, en tant que dispositif d'actionnement pour le mouvement de pivotement des lamelles d'obturateur (3), la rotation du disque à cames (5) pouvant être bloquée par engagement mécanique dans un creux de came (8) devant un flanc d'actionnement (6) d'une came, **caractérisé en ce qu'**un poussoir (9, 10), pouvant être déplacé perpendiculairement au plan du disque à cames (5), d'un électro-aimant de levage est prévu pour le blocage mécanique.

2. Dispositif selon la revendication 1, **caractérisé en ce qu'**un ressort mécanique agissant dans la direction axiale et monté dans l'électro-aimant de levage est associé au poussoir (9, 10), lequel ressort peut être tendu par rentrée du poussoir (9, 10) lors de l'alimentation en courant électrique de l'électro-aimant de levage.

3. Dispositif selon la revendication 2, **caractérisé en ce que** deux électro-aimants de levage sont prévus, lesquels sont positionnés de telle sorte que leurs poussoirs (9, 10) bloquent un flanc d'actionnement (6) des cames soit dans la position d'ouverture des lamelles d'obturateur (3) soit dans la position fermée des lamelles d'obturateur (3).

4. Dispositif selon la revendication 1, **caractérisé en ce qu'**un disque denté (12) en engagement avec le disque à cames (5) et pouvant être entraîné par celui-ci est monté de manière à pouvoir tourner sur le porte-lamelles (1), les dents duquel disque denté présentent, dans le sens de rotation, un flanc de dent correspondant au flanc d'actionnement (6) d'une came du disque à cames (5) et une forme adaptée à un creux de came (8) et l'électro-aimant de levage étant positionné pour bloquer le disque denté (12).

5. Dispositif selon la revendication 4, **caractérisé en ce que** deux électro-aimants de levage sont prévus, lesquels sont positionnés de telle sorte que leurs poussoirs (9, 10) bloquent un flanc de dent soit dans la position d'ouverture des lamelles d'obturateur (3) soit dans la position fermée des lamelles d'obturateur (3).

6. Dispositif selon la revendication 1, **caractérisé en ce qu'**un disque à ailettes (14) en engagement avec le disque à cames (5) et pouvant être entraîné par celui-ci est monté de manière à pouvoir tourner sur le porte-lamelles (1), lequel disque à ailettes comporte des ailettes (15) disposées sur sa périphérie, espacées les unes des autres et formées de manière symétrique, lesquelles peuvent être bloquées à l'aide d'un électro-aimant de levage.

7. Dispositif selon la revendication 6, **caractérisé en ce qu'**un levier à cliquet (16, 17) à un bras est monté de manière à pouvoir pivoter sur le porte-lamelles (1), lequel levier à cliquet comprend une tête de cliquet (18) qui peut être amenée en contact avec une ailette (15) du disque à ailettes (14).

8. Dispositif selon la revendication 7, **caractérisé en ce que** le levier à cliquet (16, 17) est accouplé avec un deuxième ressort à lame (21) de telle sorte que la tête de cliquet (18) puisse être pivotée contre le disque à ailettes (14).

9. Dispositif selon la revendication 8, **caractérisé en ce que** le levier à cliquet (16, 17) peut être bloqué par le poussoir (9, 10) d'un électro-aimant de levage dans une position pivotée de telle sorte que la tête de cliquet (18) se trouve entre les ailettes (15).

10. Dispositif selon la revendication 9, **caractérisé en ce que** deux leviers à cliquet (16, 17) sont prévus, lesquels peuvent respectivement être bloqués dans une position de pivotement soit dans laquelle l'avant (19) de la tête de cliquet (18) bloque une ailette (15) dans la position dans laquelle l'ailette (15) en engagement avec le disque à cames (5) maintient celui-ci dans la position fermée des lamelles d'obturateur (3) soit dans laquelle le menton (20) de la tête de cliquet (18) bloque une ailette (15) dans la position dans laquelle l'ailette (15) en engagement avec le disque à cames (5) maintient celui-ci dans la position d'ouverture des lamelles d'obturateur (3).

11. Dispositif selon la revendication 1, **caractérisé en ce que** la tête de poussoir (22) se rétrécit de manière conique.

12. Dispositif selon la revendication 1, **caractérisé en ce que** la tête de poussoir (22) est dotée d'une surface céramique.

13. Dispositif selon la revendication 11, **caractérisé en ce que** la surface (23) du composant à bloquer (5, 12, 18) coopérant avec la tête de poussoir (22) présente une inclinaison parallèle au rétrécissement conique de la tête de poussoir (22).
